# FASCICULE DE BREVET EUROPEEN

(11) **EP 4 496 719 B1**
(45) Date de publication et mention de la délivrance du brevet: **14.01.2026**
(21) Numéro de dépôt: 23709461.0
(22) Date de dépôt: 13.02.2023
(51) Int. Cl.: B60G 7/02, F16F 1/38

(54) **ENSEMBLE DE SUSPENSION COMPORTANT UN BRAS DE SUSPENSION A FIXATION RENFORCEE SUR UN BERCEAU**
AUFHÄNGUNGSANORDNUNG MIT EINEM STARR AN EINEM GESTELL BEFESTIGTEN AUFHÄNGUNGSARM
SUSPENSION ASSEMBLY COMPRISING A SUSPENSION ARM RIGIDLY ATTACHED TO A CRADLE

(30) Priorité: 21.03.2022 FR 2202473
(43) Date de publication de la demande: 29.01.2025
(73) Titulaire: Stellantis Auto SAS, 78300 Poissy (FR)
(72) Inventeur: COURTOIS, Eric, 25550 ECHENANS (FR)
(74) Mandataire: BCIP
(86) Numéro de dépôt international: PCT/FR2023/050189
(87) Numéro de publication internationale: WO 2023/180640

(56) Documents cités:
- FR-A1- 3 095 374
- JP-A- H07 208 545
- US-A1- 2018 112 733

## Description

La présente invention concerne un ensemble de suspension pour un véhicule et un véhicule qui comporte un train avant avec un tel ensemble de suspension.

La présente invention concerne plus particulièrement un tel ensemble de suspension, qui comporte un berceau solidaire de la structure du véhicule, un bras de suspension et une articulation solidaire du bras de suspension, l'articulation comportant deux pattes de fixation adaptées pour solidariser le bras de suspension sur le berceau.

Un ensemble de suspension selon le préambule de la revendication 1 est connu du document FR3095374 A1.

Pour garantir un assemblage vissé d'un bras de suspension sur un berceau avec un coefficient de frottement important pour éviter que se produise un glissement entre le bras de suspension et le berceau, il est connu d'utiliser par exemple des rondelles adaptées comme dans le document FR-A1-2928982.

Mais de telles rondelles posent des problèmes en usine finale d'assemblage, ralentissant le travail des opérateurs et représentent un coût supplémentaire non négligeable.

Le dispositif selon l'invention permet de remédier à cet inconvénient.

Il comporte en effet, selon l'invention, un ensemble de suspension, comportant un berceau solidaire de la structure du véhicule, un bras de suspension et une articulation solidaire du bras de suspension, l'articulation comportant deux pattes de fixation adaptées pour solidariser le bras de suspension sur le berceau, un tel ensemble étant tel qu'au moins une desdites pattes de fixation comporte en appui contre une surface d'appui du berceau au moins une denture adaptée pour déformer ladite surface d'appui du berceau.

Selon une première caractéristique de l'invention, les deux pattes de fixation de l'articulation sont dans un même alignement longitudinal, ladite au moins une denture s'étendant selon ledit alignement longitudinal.

Selon une deuxième caractéristique de l'invention, ladite denture s'étend le long de la patte de fixation, d'un premier bord de la patte de fixation vers un second bord distal de ladite patte de fixation.

Selon une troisième caractéristique de l'invention, la patte de fixation de l'articulation et une surface d'appui correspondante du berceau comportent des ouvertures adaptées pour permettre le montage d'une vis de fixation pour solidariser ladite articulation sur le berceau, ladite patte de fixation comportant préférentiellement deux dentures qui s'étendent parallèlement le long de la patte de fixation, de part et d'autre de ladite ouverture de la patte de fixation.

Selon une quatrième caractéristique de l'invention, le berceau comporte un support dans lequel est formée ladite ouverture du berceau pour le montage de la vis de fixation, ladite ouverture du support comportant une partie taraudée adaptée pour collaborer avec la partie filetée de la vis de fixation pour solidariser l'articulation sur le berceau, la surface d'appui du support du berceau étant préférentiellement formée dans un alliage métallique et au moins ladite ou lesdites denture(s) de la patte de fixation sont formées dans un alliage métallique, l'alliage métallique de la surface d'appui du support du berceau présentant une dureté inférieure à l'alliage métallique dans lequel est ou sont formée(s) ladite ou lesdites denture(s) de la patte de fixation.

Selon une cinquième caractéristique de l'invention, le bras de suspension comporte un support cylindrique dans lequel est positionnée une partie centrale cylindrique en plastique élastique de l'articulation.

La présente invention concerne aussi un train avant d'un véhicule automobile qui comporte un tel ensemble de suspension.

La présente invention concerne de même un véhicule automobile qui comporte un tel train avant.

Les dessins annexés illustrent l'invention :
[Fig. 1] représente une vue générale d'un tel ensemble selon l'invention lors de son assemblage.
[Fig. 2] représente une vue de détails, d'une articulation et notamment d'une des deux pattes de fixation avant assemblage.
[Fig. 3] représente une vue en coupe, au niveau d'une des deux pattes de fixation, après assemblage dudit ensemble de suspension selon l'invention.

En référence à ces dessins, un train avant d'un véhicule automobile comporte un ensemble de suspension avec un berceau 1 solidaire de la structure du véhicule et symétriquement, de chaque côté du berceau 1, un bras de suspension 2 et une articulation 3 solidaire du bras de suspension 2 qui est adaptées pour solidariser le bras de suspension 2 au berceau 1 et cela tout en laissant une certaine liberté de rotation du bras de suspension 2 et tout en créant un amortissement des vibrations qui proviennent de la roue maintenue par le bras de suspension 2 et qui pourraient se propager dans le berceau 1 et par suite, à tout le véhicule (la roue et le reste du véhicule n'étant pas représentés).

L'articulation 3 comportant deux pattes de fixation 31 adaptées pour solidariser le bras de suspension 2 sur le berceau 1.

Le bras de suspension 2 comporte un support cylindrique 21 dans lequel est positionnée une partie centrale cylindrique 32 en plastique élastique de l'articulation 3, les deux pattes de fixation 31 s'étendant de part et d'autre de la partie centrale cylindrique 32 dans un même alignement longitudinal.

Le berceau 1 comporte symétriquement de chaque côté, un support 11 qui est aussi utilisé pour d'autres fonctions de maintien du berceau 1 et qui comporte les deux surfaces d'appui de chacune des deux pattes de fixation 31.

Chacune des deux pattes de fixation 31 et les deux surfaces d'appui 13 correspondante du support 11 du berceau 1 comportent des ouvertures adaptées pour permettre le montage de deux vis de fixation 4 pour solidariser l'articulation 3 sur le support 11 du berceau 1.

L'ouverture 12 du support 11 du berceau 1 comporte une partie taraudée adaptée pour collaborer avec la partie filetée de la vis de fixation 4 évitant l'utilisation d'écrous qui rendraient le montage plus compliqué.

Un tel montage sans écrou est permis grâce aux supports 11 qui sont rapportés sur le berceau 1 ; un tel berceau 1 étant réalisé en tôle emboutis alors que le support 11 est réalisé par moulage d'un alliage métallique permettant d'avoir de telles ouvertures taraudées 12.

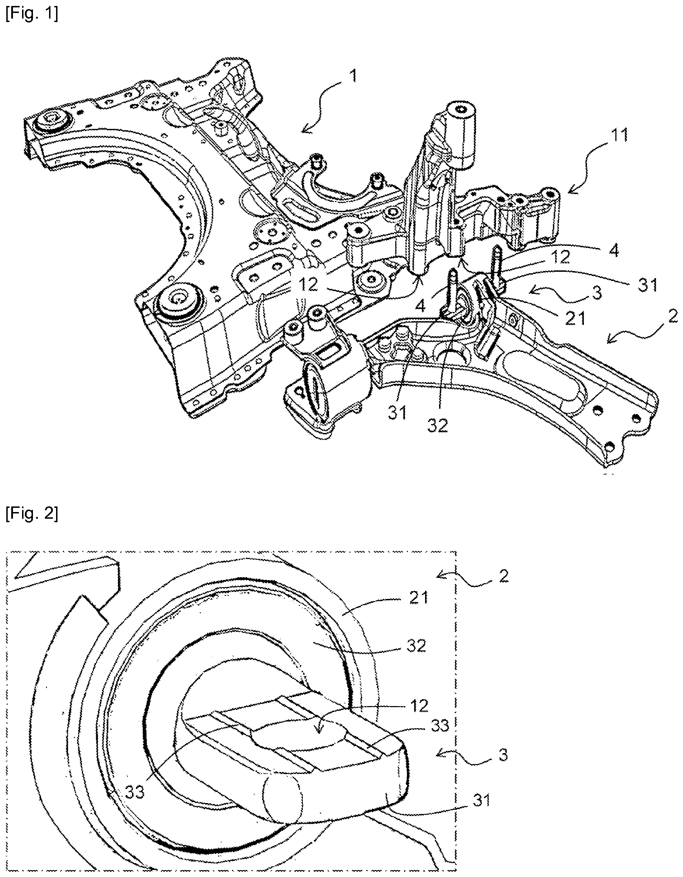

Comme plus particulièrement visible sur la figure 2, chacune des deux pattes de fixation 31 de l'articulation 3 comporte deux denture 33 qui s'étendent parallèlement selon l'alignement longitudinal de l'articulation 3, d'un premier bord de la patte de fixation 31 vers un second bord distal.

Les deux dentures 33 sont positionnées tangentiellement de part et d'autre de l'ouverture 34 pour le passage d'une des deux vis de fixation 4, avec dans cette figure 2, l'ouverture 34 va au-delà d'un positionnement tangentiel, coupant en deux chacune des deux dentures 33.

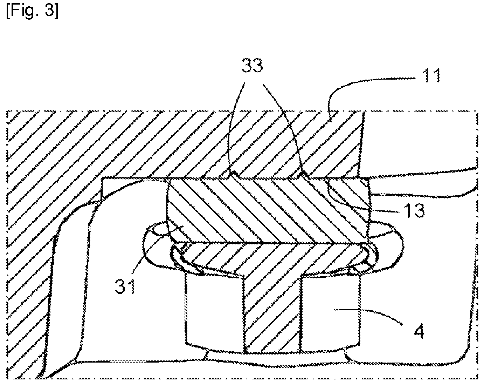

Comme plus particulièrement visible sur la figure 3, chaque patte de fixation 31 est en appui contre une surface d'appui 13 du support 11 du berceau 1, avec les deux dentures 33 qui présentent un profil triangulaire, adaptées pour déformer la surface d'appui 13 du support 11 du berceau 1.

La surface d'appui 13 du support 11 du berceau 1 est formée dans un alliage métallique qui présente une dureté inférieure à l'alliage métallique dans lequel sont formées les deux dentures 33 de la patte de fixation 31.

De telles dentures 33 alignés dans le sens longitudinal, sont orientées pour éviter un glissement de l'articulation 3 par rapport au support 11 du berceau 1, car l'essentiel des contraintes se font perpendiculairement à l'axe longitudinal de l'articulation 3.

## Revendications

1. Ensemble de suspension, comportant un berceau (1) solidaire de la structure du véhicule, un bras de suspension (2) et une articulation (3) solidaire du bras de suspension (2), l'articulation (3) comportant deux pattes de fixation (31) adaptées pour solidariser le bras de suspension (2) sur le berceau (1), **caractérisé en ce qu'**au moins une desdites pattes de fixation (31) comporte en appui contre une surface d'appui (13) du berceau (1) au moins une denture (33) adaptée pour déformer ladite surface d'appui (13) du berceau (1).

2. Ensemble de suspension selon la revendication 1, **caractérisé en ce que** les deux pattes de fixation (31) de l'articulation (3) sont dans un même alignement longitudinal, ladite au moins une denture (33) s'étendant selon ledit alignement longitudinal.

3. Ensemble de suspension selon l'une des revendications 1 ou 2, **caractérisé en ce que** ladite denture (33) s'étend le long de la patte de fixation (31), d'un premier bord de la patte de fixation (31) vers un second bord distal de ladite patte de fixation (31).

4. Ensemble de suspension selon l'une quelconque des revendications précédentes, **caractérisé en ce que** la patte de fixation (31) de l'articulation (3) et une surface d'appui (13) correspondante du berceau (1) comportent des ouvertures (12) adaptées pour permettre le montage d'une vis de fixation (4) pour solidariser ladite articulation (3) sur le berceau (1).

5. Ensemble de suspension selon la revendication précédente, **caractérisé en ce que** ladite patte de fixation (31) comporte deux dentures (33) qui s'étendent parallèlement le long de la patte de fixation (31), de part et d'autre de ladite ouverture (12) de la patte de fixation (31).

6. Ensemble de suspension selon l'une des revendications 4 ou 5, **caractérisé en ce que** le berceau (1) comporte un support (11) dans lequel est formée ladite ouverture (12) du berceau (1) pour le montage de la vis de fixation (4), ladite ouverture (12) du support (11) comportant une partie taraudée adaptée pour collaborer avec la partie filetée de la vis de fixation (4) pour solidariser l'articulation (3) sur le berceau (1).

7. Ensemble de suspension selon la revendication précédente, **caractérisé en ce que** la surface d'appui (13) du support (11) du berceau (1) et au moins ladite ou lesdites denture(s) (33) de la patte de fixation (31) sont formées dans un alliage métallique, l'alliage métallique de la surface d'appui (13) du support (11) du berceau (1) présentant une dureté inférieure à l'alliage métallique dans lequel est ou sont formée(s) ladite ou lesdites denture(s) (33) de la patte de fixation (31).

8. Ensemble de suspension selon l'une quelconque des revendications précédentes, **caractérisé en ce que** le bras de suspension (2) comporte un support cylindrique (21) dans lequel est positionnée une partie centrale cylindrique (32) en plastique élastique de l'articulation (3).

9. Train avant d'un véhicule automobile comportant un tel ensemble de suspension selon l'une quelconque des revendications précédentes.

10. Véhicule automobile comportant un tel train avant selon la revendication précédente.

## Patentansprüche

1. Aufhängungseinheit, die ein mit der Fahrzeugstruktur verbundenes Gestell (1), einen Aufhängungsarm (2) und ein mit dem Aufhängungsarm (2) verbundenes Gelenk (3) aufweist, wobei das Gelenk (3) zwei Befestigungslaschen (31) aufweist, die geeignet sind, den Aufhängungsarm (2) mit dem Gestell (1) zu verbinden, **dadurch gekennzeichnet, dass** mindestens eine der Befestigungslaschen (31) an einer Auflagefläche (13) des Gestells (1) mindestens eine Verzahnung (33) aufweist, die geeignet ist, die Auflagefläche (13) des Wiege (1).

2. Aufhängungsanordnung nach Anspruch 1, **dadurch gekennzeichnet, dass** die beiden Befestigungslaschen (31) des Gelenks (3) in einer gleichen Längsausrichtung angeordnet sind, wobei sich die wenigstens eine Verzahnung (33) in der Längsausrichtung erstreckt.

3. Aufhängungsanordnung nach einem der Ansprüche 1 oder 2, **dadurch gekennzeichnet, dass** sich die Verzahnung (33) entlang der Befestigungslasche (31) von einem ersten Rand der Befestigungslasche (31) zu einem zweiten distalen Rand der Befestigungslasche (31) erstreckt.

4. Aufhängungsanordnung nach einem der vorhergehenden Ansprüche, **dadurch gekennzeichnet, dass** die Befestigungslasche (31) des Gelenks (3) und eine entsprechende Auflagefläche (13) des Gestells (1) Öffnungen (12) aufweisen, die geeignet sind, die Montage einer Befestigungsschraube (4) zu ermöglichen, um das Gelenk (3) mit dem Gestell (1) fest zu verbinden.

5. Aufhängungsanordnung nach dem vorhergehenden Anspruch, **dadurch gekennzeichnet, dass** die Befestigungslasche (31) zwei Verzahnungen (33) aufweist, die sich parallel entlang der Befestigungslasche (31) zu beiden Seiten der Öffnung (12) der Befestigungslasche (31) erstrecken.

6. Aufhängungsanordnung nach einem der Ansprüche 4 oder 5, **dadurch gekennzeichnet, dass** das Gestell (1) einen Träger (11) aufweist, in dem die Öffnung (12) des Gestells (1) für die Montage der Befestigungsschraube (4) ausgebildet ist, wobei die Öffnung (12) des Trägers (11) einen mit einem Gewinde versehenen Teil aufweist, der geeignet ist, mit dem mit Gewinde versehenen Teil der Befestigungsschraube (4) zusammenzuwirken, um das Gelenk (3) mit dem Gestell (1) fest zu verbinden.

7. Aufhängungsanordnung nach dem vorhergehenden Anspruch, **dadurch gekennzeichnet, dass** die Auflagefläche (13) des Trägers (11) des Gestells (1) und wenigstens die eine oder die mehreren Zahnungen (33) der Befestigungslasche (31) aus einer Metalllegierung gebildet sind, wobei die Metalllegierung der Auflagefläche (13) des Trägers (11) des Gestells (1) eine geringere Härte als die Metalllegierung aufweist, in der die eine oder mehreren Zahnungen (33) des Befestigungslappens (31) gebildet sind.

8. Aufhängungsanordnung nach einem der vorhergehenden Ansprüche, **dadurch gekennzeichnet, dass** der Aufhängungsarm (2) einen zylindrischen Träger (21) aufweist, in dem ein zylindrischer Mittelteil (32) aus elastischem Kunststoff des Gelenks (3) angeordnet ist.

9. Vorderradaufhängung eines Kraftfahrzeuges mit einer solchen Aufhängungsanordnung nach einem der vorhergehenden Ansprüche.

10. Kraftfahrzeug mit einem solchen vorderen Zug nach dem vorhergehenden Anspruch.

## Claims

1. Suspension assembly, comprising a cradle (1) integral with the structure of the vehicle, a suspension arm (2) and an articulation (3) integral with the suspension arm (2), the articulation (3) comprising two fixing lugs (31) adapted to secure the suspension arm (2) to the cradle (1), **characterised in that** at least one of said fixing lugs (31) comprises, in abutment against a bearing surface (13) of the cradle (1), at least one toothing (33) adapted to deform said bearing surface (13) of the cradle (1).

2. Suspension assembly according to claim 1, **characterised in that** the two fixing lugs (31) of the articulation (3) are in the same longitudinal alignment, said at least one toothing (33) extending along said longitudinal alignment.

3. Suspension assembly according to either of Claims 1 and 2, **characterised in that** the said teeth (33) extend along the fixing lug (31), from a first edge of the fixing lug (31) to a second distal edge of the said fixing lug (31).

4. Suspension assembly according to any one of the previous claims, **characterised in that** the fixing lug (31) of the articulation (3) and a corresponding bearing surface (13) of the cradle (1) comprise openings (12) adapted to allow the assembly line of a fixing screw (4) to secure the said articulation (3) to the cradle (1).

5. Suspension assembly according to the previous claim, wherein said fixing lug (31) comprises two teeth (33) which extend parallel along the fixing lug (31), on either side of said opening (12) of the fixing lug (31).

6. Suspension assembly according to either of Claims 4 and 5, **characterised in that** the cradle (1) comprises a support (11) in which is formed the said opening (12) of the cradle (1) for the assembly line of the fixing screw (4), the said opening (12) of the support (11) comprising a tapped part designed to collaborate with the threaded part of the fixing screw (4) in order to secure the articulation (3) to the cradle (1).

7. Suspension assembly according to the previous claim, wherein the bearing surface (13) of the support (11) of the cradle (1) and at least said toothing(s) (33) of the fixing lug (31) are made of a metal alloy, the metal alloy of the bearing surface (13) of the support (11) of the cradle (1) having a hardness less than the metal alloy in which said toothing(s) (33) of the fixing lug (31) is or are made.

8. Suspension assembly according to any one of the previous claims, wherein the suspension arm (2) comprises a cylindrical support (21) in which is positioned a cylindrical central part (32) made of elastic plastic of the articulation (3).

9. Front axle assembly of a motor vehicle comprising such a suspension assembly according to any one of the previous claims.

10. Motor vehicle comprising such a nose gear according to the previous claim.
